# EUROPÄISCHE PATENTSCHRIFT

(11) **EP 2 252 560 B1**
(45) Veröffentlichungstag und Bekanntmachung des Hinweises auf die Patenterteilung: **29.08.2018**
(21) Anmeldenummer: 08863132.0
(22) Anmeldetag: 18.12.2008
(51) Int. Cl.: C04B 24/26, C04B 28/02, C09K 3/10

(54) **MEHRKOMPONENTIGE ZUSAMMENSETZUNG ZUM FÜLLEN UND/ODER VERPRESSEN VON RISSEN, FEHLSTELLEN UND HOHLRÄUMEN BEI BAUWERKEN ODER BODEN- UND GESTEINSFORMATIONEN**
MULTICOMPONENT COMPOSITION FOR FILLING AND/OR GROUTING CRACKS, FLAWS, AND CAVITIES IN STRUCTURES OR EARTH AND STONE FORMATIONS
COMPOSITION MULTICOMPOSANT POUR LE REMPLISSAGE ET/OU LA COMPRESSION DE FISSURES, DE ZONES DÉFECTUEUSES ET DE CAVITÉS DANS DES OUVRAGES OU DANS DES FORMATIONS DU SOL ET DES FORMATIONS ROCHEUSES

(30) Priorität: 18.12.2007 DE 102007061497
(43) Veröffentlichungstag der Anmeldung: 24.11.2010
(73) Patentinhaber: Sika Technology AG, 6340 Baar (CH)
(72) Erfinder: BOULKERTOUS, Nabil, 89312 Günzburg (DE); KLOSTER, Magnus, 89165 Dietenheim (DE); MEYER, Klaus, 40880 Ratingen (DE)
(74) Vertreter: Sika Patent Attorneys
(86) Internationale Anmeldenummer: PCT/EP2008/067899
(87) Internationale Veröffentlichungsnummer: WO 2009/077591

(56) Entgegenhaltungen:
- EP-A- 0 893 486
- EP-A- 1 371 671
- WO-A-2007/071636
- DE-A1- 1 495 329
- DE-A1- 3 524 796
- DE-A1- 19 620 817
- DE-A1- 19 723 474
- US-A- 4 197 225
- DATABASE WPI Week 200245 Thomson Scientific, London, GB; AN 2002-419889 XP002522030 -& JP 2002 012463 A (ASAHI GLASS CO LTD) 15. Januar 2002 (2002-01-15)
- DATABASE WPI Week 199644 Thomson Scientific, London, GB; AN 1996-439322 XP002522031 -& JP 08 217516 A (TOBU KAGAKU KK) 27. August 1996 (1996-08-27)
- CHEMICAL ABSTRACTS, AMERICAN CHEMICAL SOCIETY, US, 1. Januar 1900 (1900-01-01), XP000157989 ISSN: 0009-2258

## Beschreibung

### Technisches Gebiet

Die Erfindung betrifft eine mehrkomponentige Zusammensetzung zum Füllen und/oder Verpressen von Rissen, Fehlstellen und Hohlräumen bei Bauwerken oder Boden- und Gesteinsformationen.

### Stand der Technik

Zum Füllen und/oder Verpressen von Rissen, Fehlstellen und Hohlräumen bei Bauwerken oder Boden- und Gesteinsformationen gegen das Eindringen von Feuchtigkeit sind verschiedenartige Materialien bekannt. Insbesondere werden Dichtmittel auf Basis von Polyurethanen, Epoxidharzen, (Meth)acrylaten sowie auf Zementbasis eingesetzt. Diese Dichtstoffe weisen ein jeweils sehr eigenständiges Spektrum an Eigenschaften auf, wodurch sie für unterschiedliche Zwecke des Füllens oder Verpressens eingesetzt werden. Diese Materialeigenschaften werden gemäss der Europäischen Norm EN 1504, Teil 5 "Injektion von Betonbauteilen" in drei Gruppen aufgeteilt. Eine erste Gruppe bilden die kraftschlüssigen Dichtmittel, eine zweite Gruppe bilden die dehnfähigen Dichtmittel und eine dritte Gruppe bilden die quellfähigen Dichtmittel.

In die erste Gruppe der kraftschlüssigen Dichtmittel werden Epoxidharze und zementöse Dichtmittel gezählt. Zur zweiten Gruppe der dehnfähigen Dichtmittel zählen die Polyurethane und zur dritten Gruppe der quellfähigen Dichtmittel zählen die Poly(meth)acrylate. Zur dritten Gruppe zählen beispielsweise die in der WO 2007/071636 A2 beschriebenen polymerisierbaren Quellpasten, die durch Vermischen einer ersten monomerhaltigen Komponente mit einer zweiten einen Radikalstarter enthaltenden Komponente und anschliessende Polymerisation hergestellt werden. Im Rahmen der WO 2007/071636 A2 wird als Radikalstarter ein wasserunlöslicher oder zumindest schlecht wasserlöslicher Radikalstarter eingesetzt, um dessen Auflösung/Zersetzung bei Kontakt mit Wasser zu unterbinden.

Zementöse Dichtmittel der ersten Gruppe werden aufgrund ihrer hohen Wirtschaftlichkeit häufig für die Verfüllung grösserer Hohlräume wie beispielsweise Firstverpressungen verwendet. Für abdichtende Verfüllungen sind diese zementösen Materialien jedoch nur bedingt geeignet, da sie bei Wasser führenden Fehlstellen vor der Erhärtung ausgewaschen würden. Weiterhin besteht aufgrund der kraftschlüssigen Verfüllung die Gefahr, dass die verfüllten Fehlstellen bei Belastungen der Bauteile wieder aufreissen.

Im Gegensatz zu den zementösen Dichtmitteln weisen Dichtmittel auf der Basis organischer Materialien, wie beispielsweise Polyurethane oder Poly(meth)acrylate, ein sehr breites Reaktionsverhalten auf, welches je nach chemischer Beschaffenheit des Dichtmittels weitgehend beeinflussbar ist. So kann insbesondere die Aushärtungszeit der Zusammensetzung mittels beschleunigender Substanzen, wie beispielsweise Katalysatoren, sehr variabel in einem Bereich von wenigen Sekunden bis hin zu mehreren Stunden eingestellt werden. Weiterhin können Dichtmittel hergestellt werden, welche durch ihre flexiblen Eigenschaften Bewegungen innerhalb des Füllkörpers bis zu einem gewissen Mass schadlos aufnehmen. Nachteilig wirken sich bei den Dichtmitteln auf Basis organischer Materialien jedoch die höheren Materialkosten aus. Bei üblichen Epoxidharzen und Polyurethanen sind zur Reinigung der bei der Verarbeitung und bei der Applikation notwendigen Gerätschaften ausserdem organische Lösungsmittel erforderlich. Dies ist wiederum weniger wirtschaftlich und aus umwelttechnischer Sicht eher als problematisch zu bewerten, da die Lösungsmittel nach ihrem Einsatz zur Reinigung entsorgt werden müssen. Wasserbasierende Systeme, wie typischerweise Poly(meth)-acrylatsysteme oder spezielle hydrophile Polyurethane (Polyurethangele) erweisen sich aus ökologischer Sicht weniger problematisch, stehen aber aufgrund ihres Quellverhaltens im Zusammenhang mit einem eher niedrigen pH-Wert in der Diskussion hinsichtlich einer möglichen Korrosionsgefahr für Bewehrungseisen bei Stahlbetonbauten.

Es ist auch bekannt, zementöse Materialien als Dichtmittel im nicht abgebundenen Zustand mit Kunststoffdispersionen zu vermischen, um die Fliess-, Erstarrungs- und Verarbeitungseigenschaften des noch fliessfähigen Dichtmittels positiv zu beeinflussen. Bei hohen Konzentrationen derartiger Kunststoffdispersionen im nicht abgebundenen Dichtmittel, hat der Kunststoffanteil jedoch eine nicht zu vernachlässigende Wirkung im ausgehärteten Zustand, beispielsweise auf die Härte, die Porosität und auf die Dichte.

In der DE 197 23 474 A1 wird eine Verarbeitung von Spritzbeton oder Spritzmörtel beschrieben, bei der Zement, Sand und gegebenenfalls Kies mit einem Styrol/(Meth)acrylat-Copolymer gemischt und mit Wasser ausgehärtet wird. Die Verbindung von Zement mit einem organischen Polymer soll dabei zu verbesserten Rückpralleigenschaften, Korrosionswiderstandsfähigkeit und Penetrationsdichtigkeit gegenüber Wasser und organischen Medien führen.

Ebenfalls beschrieben wurden Kombinationen von zementösen Materialien im nicht abgebundenen Zustand mit radikalisch härtbaren Monomeren, bei denen der Zement und die Monomere simultan gehärtet werden. So beschreibt beispielsweise die DE 1 149 329 A1 Zusammensetzungen auf Basis von Portlandzement, ungesättigten polymerisierbaren Polyestern und gegebenenfalls weiteren Monomeren, die mit Hilfe von Radikalinitiatoren wie Ammoniumpersulfat unter Zusatz von Wasser gehärtet werden. Die derart hergestellten Zementprodukte sollen gegenüber konventionellen Zementprodukten eine erhöhte Festigkeit aufweisen. Die EP 1 371 671 A1 beschreibt Härter für zweikomponentige Mörtelmassen, die neben Radikalbildnern und Wasser ein vinyl- oder allylmodifiziertes Polyalkylenglycol enthalten sollen. Die beschriebenen Härter können mit einer Harzkomponente, beispielsweise auf Basis eines Epoxyacrylates und Zement, gemischt und ausgehärtet werden. Die Härter sollen eine gute Stabilität des Radikalbildners gegenüber Zersetzung gewährleisten und zu guten Festigkeitseigenschaften in den ausgehärteten Mörtelmassen beitragen.

Schließlich sind Kombinationen von zementösen Materialien im nicht abgebundenen Zustand mit Polyisocyanaten bekannten, bei denen ähnlich wie im Vorstehenden eine simultane Härtung der Polyisocyanate und des Zements erfolgt. In der JP 2002-012463 sind beispielsweise Systeme beschrieben, bei denen das Verhältnis der Hydroxygruppen zu den Isocyanatgruppen 1 : 3 bis 1 : 4.5 beträgt. Derartige Zusammensetzungen sollen nach der Aushärtung zu einem Bodenbelag eine hohe Wärmeresistenz aufweisen. Die JP 08-172516 beschreibt thermoplastische Zement-Zusammensetzungen auf Basis von thermoplastischen Harzen, Zement und einem Reaktionsprodukt eines Polyoxyalkylenpolyols mit einem Polyisocyanat und einem Blockierungsmittel für das Polyisocyanat. Auch die in der JP 08-172516 beschriebenen Produkte sollen sich durch eine verbesserte Wärmeresistenz und Festigkeit auszeichnen.

Bei der Wahl der Dichtmittel ist man auf die Kombination der Eigenschaften der einzelnen Bestandteile im nicht ausgehärteten und im ausgehärteten Zustand eingeschränkt. Wünschenswert wäre es, wenn die Eigenschaften der oben genannten Dichtmittel der drei verschiedenen Gruppen nach EN 1504 frei kombiniert werden könnten.

### Darstellung der Erfindung

Aufgabe der Erfindung ist es daher, ein Dichtmittel zum Füllen und/oder Verpressen von Rissen, Fehlstellen und Hohlräumen bei Bauwerken oder Boden- und Gesteinsformationen zur Verfügung zu stellen, welches die Nachteile des Stands der Technik überwindet und dessen Eigenschaften sowohl im Ausgangszustand als auch im ausgehärteten Zustand über einen weiten Bereich eingestellt werden können.

Überraschenderweise wurde gefunden, dass mehrkomponentige Zusammensetzungen gemäss Anspruch 1 diese Aufgabe lösen.

Durch den für den Fachmann in keiner Weise nahe liegenden Einsatz einer wässrigen Zusammensetzung umfassend Wasser, ein zementöses Bindemittel, eine wässrige Kunststoffdispersion sowie mindestens ein radikalisch polymerisierbares Monomer und einen Radikalbildner kann ein Dichtmittel bereitgestellt werden, welches die Vorteile von zementösen Systemen, nämlich die Langlebigkeit, Stabilität und die hohe Wirtschaftlichkeit, mit denen von Kunststoffbasierenden Systemen, nämlich die hohe Bandbreite der Eigenschaften vereint.

Die Mischung von Zement als Dichtmittel der ersten Gruppe mit den Dichtmitteln der anderen Gruppen wird dadurch vorgenommen, dass die erfindungsgemässe Zusammensetzung die organischen Bestandteile als Monomere, Prepolymere oder als Polymerblöcke aufweist. Erst beim Abbinden bzw. bei der Aushärtung der erfindungsgemässen Zusammensetzung bilden sich darin organische polymere Bestandteile. Durch die Bildung des Polymers während des Abbindens neben dem anorganischen Zement, entsteht ein Dichtmittel mit bisher nicht gekannten Eigenschaften. Der anorganische Zement befindet sich dabei in einer Matrix aus organischen Bestandteilen. Derartige Mischungen bieten ein anderes Eigenschaftenspektrum als eine reine Mischung von Zement, der alleine abbindet, neben einer Dispersion von Kunststoff. In letzteren bilden sich Zementphasen, welche mit Kunststoff ausgefüllte Hohlräume ausbilden. Diese Phasen sind zwar leichter als die reinen Zementphasen, jedoch zeigen diese porösen Zemente keine Dehnfähigkeit und auch keine Quellfähigkeit.

Durch die erfindungsgemässe Mischung von nicht abgebundenem zementösen Bindemittel und radikalisch polymerisierbaren Monomeren bilden sich bei der Aushärtung Mischphasen aus organischem Polymer und anorganischem Zement, wobei das organische Polymer Netzwerke bildet, innerhalb derer sich Zementphasen mit sehr kleinen Domänen ausbilden. Im Ergebnis erhält man ein zementöses Dichtmittel welches Quell- und Dehnfähigkeit in beachtlichem Masse aufweist.

Ein weiterer Vorteil der erfindungsgemässen Zusammensetzung ist die gute Einstellbarkeit der Abbinde- bzw. der Aushärtungszeit. Diese wird dominiert vom Aushärtungsverhalten des organischen Materials und reicht von wenigen Sekunden bis hin zu mehreren Stunden. Wenn in der erfindungsgemässen Zusammensetzung der organische Anteil weitgehend ausgehärtet ist, bleibt dem zementösen Bindemittel eine Zeit zum Nachhärten. Die Zusammensetzung ist also gut in ihrem Abbindeverhalten steuerbar. Zusammensetzungen bzw. Dichtmittel, die auf reinem Zement basieren, sind auf die Abbindezeit des Zements eingeschränkt. Zement ist durch Additive bei weitem nicht so breit in seinem Abbindeverhalten einstellbar, wie erfindungsgemässe Zusammensetzungen.

Durch die Quell- und/oder Dehnfähigkeit ist die erfindungsgemässe Zusammensetzung auch in der Lage, nachdem sie in kleine Fugen und/oder Risse eingedrungen ist, diese verlässlich abzudichten. Auch bei sich ausdehnenden Fugen und/oder Rissen, kann die dabei entstehende Änderung des zu füllenden Hohlraums durch die Eigenschaften der erfindungsgemässen Zusammensetzung ausgeglichen werden, was mit den rein zementbasierten Verpressmaterialien nicht möglich ist.

Neben den vorteilhaften mechanisch-physikalischen Eigenschaften hat die erfindungsgemässe Zusammensetzung auch vorteilhafte chemische Eigenschaften. Während die auf Poly(meth)acrylaten basierenden Dichtmittel aufgrund der Säureeigenschaft der Monomere einen niedrigen pH-Wert zeigen, weist die erfindungsgemässe Zusammensetzung nach dem Abbinden alkalische Eigenschaften auf. Der höhere pH-Wert wird durch das zementöse Bindemittel eingebracht und hilft, Bewehrungseisen durch chemische Passivierung zu schützen. Die sauren bis maximal schwach basischen Eigenschaften des reinen Poly(meth)acrylats führen hingegen zu einer vorzeitigen Korrosion der Bewehrungseisen an deren Kontaktstellen mit dem Dichtmittel.

Weiterhin zeigen reine Zementsuspensionen beim Abbinden oftmals einen Schrumpfeffekt, der durch die Kristallisation der anorganischen Bestandteile im Zement entsteht. Die Quelleigenschaft erfindungsgemässer Zusammensetzungen gleicht diesen Schrumpfeffekt aus. Auf diese Weise bilden sich keine Haarrisse oder Kapillaren innerhalb des Dichtmittels, durch welche Feuchtigkeit in den Hohlraum eindringen könnte.

Gegenüber Polyurethanschäumen weist die erfindungsgemässe Zusammensetzung auch ökologische Vorteile auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine mehrkomponentige Zusammensetzung zum Füllen und/oder Verpressen von Rissen, Fehlstellen und Hohlräumen bei Bauwerken oder Boden- und Gesteinsformationen umfassend
i) Wasser;
ii) mindestes ein zementöses Bindemittel, wobei der Anteil des zementösen Bindemittels an der gesamten mehrkomponentigen Zusammensetzung 10 bis 70 Gew.-% beträgt;
iii) eine wässrige Kunststoffdispersion; sowie
iv) mindestens ein radikalisch polymerisierbares Monomer, wobei der Anteil an radikalisch polymerisierbarem Monomer 5 bis 50 Gew.-% beträgt; sowie (v) mindestens einen Radikalbildner, wobei der Anteil an Radikalbildner 0.01 bis 5 Gew.-% beträgt, dadurch gekennzeichnet, dass die wässrige Kunststoffdispersion ausgewählt ist aus der Gruppe bestehend aus einer wässrigen Dispersion von Poly(meth)acrylaten; aus einer wässrigen Dispersion von Copolymeren aus (Meth)acrylaten und Styrol; aus einer wässrigen Dispersion von Copolymeren aus (Meth)acrylaten und Vinylestern von tertiären Carbonsäuren; aus einer wässrigen Dispersion von Copolymeren aus (Meth)acrylaten, Vinylestern von tertiären Carbonsäuren und Vinylacetat; aus einer wässrigen Dispersion von Copolymeren aus Styrol und Butadien; aus einer wässrigen Dispersion von Copolymeren aus Vinylacetat und (Meth)acrylsäureester; aus einer wässrigen Dispersion von Copolymeren aus Vinylacetat und Ethylen; aus einer wässrigen Dispersion von Copolymeren aus Vinylacetat, Ethylen und Vinylester; und aus einer wässrigen Polyurethandispersionen.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "polymeres Polyol" umfasst im vorliegenden Dokument ein beliebiges Polymer gemäss vorhergehender Definition, welches mehr als eine Hydroxylgruppe aufweist. Dem entsprechend umfasst der Begriff "polymeres Diol" ein beliebiges Polymer, welches genau zwei Hydroxylgruppen aufweist.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter dem Begriff "Topfzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, so dass keine zweckmässige Verarbeitung der Zusammensetzung mehr möglich ist.

Unter "Molekulargewicht" versteht man im vorliegenden Dokument stets das Zahlenmittel des Molekulargewichts Mₙ.

Die erfindungsgemässe mehrkomponentige Zusammensetzung umfasst mindestens eine wässrige Kunststoffdispersion der vorstehend angegebenen Art. Die wässrige Kunststoffdispersion ist demzufolge ausgewählt aus der Gruppe bestehend aus einer wässrigen Dispersion von Poly(meth)acrylaten; aus einer wässrigen Dispersion von Copolymeren aus (Meth)acrylaten und Styrol; aus einer wässrigen Dispersion von Copolymeren aus (Meth)acrylaten und Vinylestern von tertiären Carbonsäuren; aus einer wässrigen Dispersion von Copolymeren aus (Meth)acrylaten, Vinylestern von tertiären Carbonsäuren und Vinylacetat; aus einer wässrigen Dispersion von Copolymeren aus Styrol und Butadien; aus einer wässrigen Dispersion von Copolymeren aus Vinylacetat und (Meth)acrylsäureester; aus einer wässrigen Dispersion von Copolymeren aus Vinylacetat und Ethylen; aus einer wässrigen Dispersion von Copolymeren aus Vinylacetat, Ethylen und Vinylester; und aus einer wässrigen Polyurethandispersionen.

Als tertiäre Carbonsäuren werden hierbei stark verzweigte, gesättigte Carbonsäuren mit längeren Seitenketten, wie sie dem Fachmann auch unter dem Begriff Versatic®-Säuren bekannt sind, verstanden. Geeignete Vinylester von tertiären Carbonsäuren sind dem Fachmann auch als VeoVa® bekannt.

Insbesondere ist die wässrige Kunststoffdispersion ausgewählt aus der Gruppe bestehend aus einer wässrigen Dispersion von (Meth)acrylatpolymeren; von Copolymeren aus (Meth)acrylaten und Styrol; von Copolymeren aus Styrol und Butadien; und von Copolymeren aus Vinylacetat, Ethylen und Vinylester.

Unter wässriger Kunststoffdispersion werden im vorliegenden Dokument sowohl Kunststoffdispersionen verstanden, deren feste Kunststoffbestandteile bereits vor der Herstellung der mehrkomponentigen Zusammensetzung in Wasser dispergiert vorliegen als auch feste, insbesondere pulverförmige, Kunststoffdispersionsanteile, welche erst bei der Verwendung der mehrkomponentigen Zusammensetzung mit dem darin enthaltenen Wasser in Berührung kommen und darin dispergierbar sind. Je nach Ausführungsform der mehrkomponentigen Zusammensetzung, wird die wässrige Kunststoffdispersion als dispergierbarer Feststoff oder als bereits dispergierter Feststoff eingesetzt.

Weiterhin umfasst die erfindungsgemässe mehrkomponentige Zusammensetzung mindestens ein radikalisch polymerisierbares Monomer.

Der Anteil an radikalisch polymerisierbarem Monomer beträgt 5 bis 50 Gew.-%, insbesondere 5 bis 40 Gew.-%, bevorzugt 10 bis 20 Gew.-%, an der gesamten Zusammensetzung.

Das radikalisch polymerisierbare Monomer ist insbesondere ausgewählt aus der Gruppe bestehend aus Vinylester, (Meth)acrylsäure, einem Salz von (Meth)acrylsäure, (Meth)acrylester, Acrylamid und Styrol.

Beispielsweise sind geeignete radikalisch polymerisierbare Monomere ausgewählt aus der Gruppe bestehend aus Vinylacetat, Methyl(meth)acrylat, Ethyl(meth)acrylat, n- und i-Butyl(meth)acrylat, Hexyl(meth)acrylat, 2-Ethylhexyl(meth)acrylat, Isodecyl(meth)acrylat, Cyclohexyl(meth)acrylat, 3-Tetrahydrofuryl(meth)acrylat, Isobornyl(meth)acrylat, Norbornyl(meth)acrylat, Trimethylcyclohexyl(meth)acrylat, Benzyl(meth)acrylat, Hydroxyalkyl(meth)acrylat wie 2-Hydroxyethyl(meth)acrylat, 2- und 3-Hydroxypropyl(meth)acrylat oder Hydroxybutyl(meth)acrylat, Tetrahydrofurfuryl(meth)acrylat, 2-(2-Ethoxyethoxy)ethyl(meth)acrylat, Butyldiglykol(meth)acrylat, Isotridecyl(meth)acrylat, Lauryl(meth)acrylat, Stearyl(meth)acrylat, Phenoxyethyl(meth)acrylat, Dicyclopentadienyloxyethyl(meth)acrylat, Dihydrodicyclopentadienyl(meth)acrylat, ethoxyliertem Nonylphenol(meth)acrylat, Alkoxypolyalkylenglykol(meth)acrylate wie Methoxypolyethylenglykolmethacrylat, wobei das Molekulargewicht Mₙ des Polyethylenglykols 300 bis 1000 g/mol, vorzugsweise 350 g/mol, 500 g/mol, 750 g/mol oder 1000 g/mol, beträgt, Aminoalkyl(meth)acrylate wie 2-Dimethylaminoethyl(meth)acrylat oder 3-Dimethylaminopropylmethacrylamid, 2-Trimethylammoniumethyl(meth)acrylatchlorid, 3-Trimethylammoniumpropyl-(meth)acrylamidchlorid, N-(2-Methacryloyloxyethyl)ethylenharnstoff und dergleichen.

Weiterhin eignen sich als radikalisch polymerisierbare Monomere vernetzende Monomere wie beispielsweise Allyl(meth)acrylat oder vernetzende difunktionelle (Meth)acrylate wie beispielsweise oligomere oder polymere Verbindungen der Formel (I).

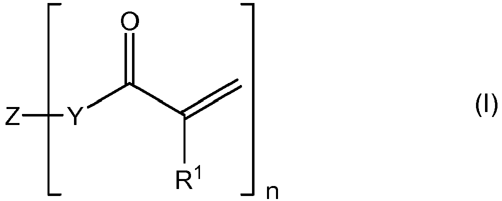

Der Rest R¹ steht dabei für ein Wasserstoffatom oder für eine Methylgruppe. Der Index n steht für einen Wert von 2 bis 5. Weiterhin steht Z für ein Polyol nach Entfernung von n Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (I) ist insbesondere ausgewählt aus der Gruppe bestehend aus Ethylenglykoldi(meth)acrylat, 1,3- und 1,4-Butandioldi-(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Insbesondere steht n in der Verbindung der Formel (I) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige difunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylenglykoldi(meth)acrylat; Polypropylenglykoldi(meth)acrylat wie Dipropylenglykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer® SR 348 kommerziell erhältlich von der Firma Sartomer Company, Inc., USA.

Weiterhin geeignet sind als radikalisch polymerisierbare Monomere auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer® CN 104 kommerziell erhältlich von der Firma Sartomer Company, Inc., USA.

Geeignete polyhydroxyterminierte Acrylnitril/Butadien-Copolymere werden typischerweise aus carboxylterminierten Acrylnitril/Butadien-Copolymeren, welche beispielsweise unter dem Namen Hypro® (früher Hycar®) CTBN von Emerald Performance Materials, LLC, USA, kommerziell erhältlich sind, und Epoxiden oder Aminoalkoholen hergestellt.

Derartige geeignete radikalisch polymerisierbare Monomere der Formel (I) sind beispielsweise auch kommerziell erhältlich von der Firma Kraton Polymers, USA, oder unter den Handelsnamen Hypro® VTB und Hypro® VTBNX von der Firma Emerald Performance Materials, LLC, USA.

Weiterhin geeignet handelt es sich beim Monomer der Formel (I) um ein Polyurethan(meth)acrylat. Derartige Verbindungen sind typischerweise, in einer dem Fachmann bekannten Art und Weise, herstellbar aus der Reaktion von mindestens einem Polyisocyanat, insbesondere einem Diisocyanat, und einer (Meth)acrylsäure, einem (Meth)acrylamid oder einem (Meth)acrylsäureester, welcher eine Hydroxylgruppe aufweist. Vorzugsweise kann das Diisocyanat vor der Umsetzung mit (Meth)acrylsäure, einem (Meth)acrylamid oder einem (Meth)acrylsäureester, welcher eine Hydroxylgruppe aufweist, mit mindestens einem Polyol **P,** insbesondere einem Diol, in einem dem Fachmann bekannten Verfahren zu einem Isocyanatgruppen aufweisenden Polyurethanpolymer umgesetzt werden.

Zur Umsetzung mit den Isocyanatgruppen des Polyisocyanats eignen sich insbesondere Hydroxyalkyl(meth)acrylate wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Diisocyanate eignen sich grundsätzlich alle Diisocyanate. Beispielsweise sind erwähnt 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyana-to-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Bevorzugte Polyole **P** sind Polyoxyalkylenpolyole, auch "Polyetherpolyole" genannt, Polyesterpolyole, Polycarbonatpolyole und deren Mischungen. Die meist bevorzugten Polyole sind Diole, insbesondere Polyoxyethylendiole, Polyoxypropylendiole oder Polyoxybutylendiole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, sogenannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin sind dies Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol oder durch Oxidation von Polybutadien hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren (kommerziell erhältlich unter dem Namen Hypro® CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Beispielsweise sind geeignete Polyole **P** in den Abschnitten [0029] bis [0039] von US 2006/0122352 A1 beschrieben.

Insbesondere ist das radikalisch polymerisierbare Monomer der Formel (I) bei Raumtemperatur flüssig, was auch zähflüssige und hochviskose Verbindungen einschliesst. Meist bevorzugt ist das radikalisch polymerisierbare Monomer der Formel (I) bei Raumtemperatur jedoch flüssig bis dünnflüssig.

Insbesondere handelt es sich beim radikalisch polymerisierbaren Monomer um ein hydrophiles (Meth)acrylatmonomer. Bevorzugte hydrophile (Meth)acrylatmonomere sind ausgewählt aus der Gruppe bestehend aus (Meth)acrylsäure, einem Salz von (Meth)acrylasäure, einem Hydroxyalkyl-(meth)acrylat wie Hydroxyethylacrylat (HEA), Hydroxyethylmethacrylat (HEMA), Hydroxypropylacrylat (HPA), Hydroxypropylmethacrylat (HPMA), Hydroxybutylacrylat (HBA), Hydroxybutylmethacrylat (HBMA), einem Monohydroxypoly(meth)acrylat eines Polyols wie Glycerin oder Trimethylolpropan, und einem Alkoxypolyalkylenglykol(meth)acrylat wie Methoxypolyethylenglykolmethacrylat, wobei das Molekulargewicht Mₙ des Polyethylenglykols 300 bis 1000 g/mol, vorzugsweise 350 g/mol, 500 g/mol, 750 g/mol oder 1000 g/mol, beträgt.

Handelt es sich beim radikalisch polymerisierbaren Monomer um ein Monomer der Formel (I), so ist auch dieses bevorzugt so aufgebaut, dass ein hydrophiles Monomer resultiert. So sind beim Aufbau derartiger Monomere möglichst hydrophile Ausgangsstoffe oder gegebenenfalls Ausgangsstoffe mit möglichst wenig hydrophoben Anteilen einzusetzen.

Von den Monomeren der Formel (I) sind insbesondere Polyethylenglykoldi(meth)acrylate oder hydrophile Polyurethan(meth)acrylate geeignet.

Meist bevorzugte hydrophile (Meth)acrylatmonomere sind HPA, HPMA, HBA, HBMA, HEA oder HEMA.

Selbstverständlich ist es möglich und kann sogar von Vorteil sein Mischungen der vorhergehend beschriebenen radikalisch polymerisierbaren Monomere einzusetzen. Ebenfalls möglich ist der Einsatz von Poly(meth)-acrylaten der vorhergehend beschriebenen radikalisch polymerisierbaren Monomere, wobei diese Poly(meth)acrylaten insbesondere ein Molekulargewicht Mₙ von ≤ 5'000 g/mol aufweisen.

Die Zusammensetzung, die ein radikalisch polymerisierbares Monomer aufweist, kann weiterhin mindestens ein Metall(meth)acrylat umfassen. Metall(meth)acrylate haben die Eigenschaft, die Festigkeit, die Haftung und die Temperaturbeständigkeit von ausgehärteten Zusammensetzungen auf der Basis von radikalisch polymerisierbaren Monomeren zu steigern, ohne dabei die Flexibilität und die Bruchdehnung zu beeinträchtigen.

Als Metall(meth)acrylate eignen sich Metall(meth)acrylate von Calcium, Magnesium oder Zink. Bevorzugte Metall(meth)acrylate sind Zinkdi(meth)-acrylat, Calciumdi(meth)acrylat, Zn(OH)(meth)acrylat und Magnesiumdi(meth)acrylat, meist bevorzugt Magnesiumdi(meth)acrylat.

Der Anteil an Metall(meth)acrylat an der gesamten Zusammensetzung beträgt vorzugsweise 0.1 bis 20 Gew.-%, insbesondere 1 bis 15 Gew.-%, bevorzugt 1 bis 10 Gew.-%.

Weiterhin umfasst die erfindungsgemässe mehrkomponentige Zusammensetzung, welche ein radikalisch polymerisierbares Monomer aufweist, mindestens einen Radikalbildner.

Der Radikalbildner ist insbesondere ausgewählt aus der Gruppe bestehend aus Azo-bis-isobutyronitril (AIBN), einer anorganischen Peroxidverbindung, insbesondere einer Peroxidverbindung aus Kalium- und/oder Ammoniumperoxodisulfat, bevorzugt Natriumpersulfat, und einer organischen Peroxidverbindung, insbesondere Dibenzoylperoxid.

Der Radikalbildner wird in einer Menge von 0.01 bis 5 Gew.-%, insbesondere von 0.01 bis 1 Gew.-%, bevorzugt 0.05 bis 0.1 Gew.-%, bezogen auf die gesamte Zusammensetzung, eingesetzt.

Typischerweise weist eine derartige Zusammensetzung neben dem Radikalbildner weiterhin mindestens einen Katalysator für die Radikalbildung auf, welcher oftmals auch als Beschleuniger bezeichnet wird. Dieser Katalysator ist insbesondere ein tertiäres Amin, ein Übergangsmetallsalz oder ein Übergangsmetallkomplex. Beispielsweise sind solche geeignete tertäre Amine insbesondere ausgewählt aus der Gruppe bestehend aus Di- oder Trialkanolaminen, bevorzugt Di- oder Triethanolamin oder deren Mischung, N,N-Dimethylanilin, N,N-Diethylanilin, N,N-Bis(hydroxyalkyl)aniline wie N,N-Bis(2-hydroxyethyl)anilin, N,N-Alkylhydroxyalkylaniline wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis(hydroxyethyl)-p-toluidine, N-ethoxyliertes p-Toluidin, N,N-Bis(2-hydroxyethyl)-xylidin, N-Alkylmorpholin und Mischungen davon. Übergangsmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] - [0054] von US 2002/0007027 A1.

Der Katalysator für die Radikalbildung ist insbesondere ein Di- oder Trialkanolamin, bevorzugt Di- oder Triethanolamin oder deren Mischung.

Der Katalysator für die Radikalbildung wird üblicherweise in einer Menge von 0.01 bis 3 Gew.-%, insbesondere von 0.1 bis 2 Gew.-%, bezogen auf die gesamte Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden.

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Weiterhin umfasst die erfindungsgemässe mehrkomponentige Zusammensetzung mindestes ein zementöses Bindemittel. Als zementöses Bindemittel eignen sich insbesondere einfache Zemente, Kompositzemente, Portlandzemente oder Mischungen von Portlandzement mit Hüttensand. Bevorzugt ist das zementöse Bindemittel ein Feinzement und/oder ein Ultrafeinzement, insbesondere ein Zement mit einer Feinheit von 2'000 bis 16'000 cm²/g nach Blaine.

Das zementöse Bindemittel, welcher in der erfindungsgemässen mehrkomponentigen Zusammensetzung eingesetzt wird, kann weiterhin dem Fachmann bekannte Zuschlagsstoffe, wie sie oftmals in Zementen eingesetzt werden, enthalten. Beispielsweise sind derartige Zuschlagsstoffe Fliessmittel, welche die Konsistenz des zementösen Bindemittels zu Gunsten einer verbesserten Verarbeitbarkeit beeinflussen.

Geeignete Fliessmittel sind beispielsweise unter dem Handelsnamen Sika Viscocrete® kommerziell erhältlich von Sika Schweiz AG.

Der Anteil des zementösen Bindemittels an der gesamten mehrkomponentigen Zusammensetzung beträgt 10 bis 70 Gew.-%, insbesondere 20 bis 60 Gew.-%, bevorzugt 25 bis 50 Gew.-%.

Die erfindungsgemässe Zusammensetzung kann zusätzlich weitere Bestandteile enthalten. Derartige zusätzliche Bestandteile sind insbesondere, Farbstoffe, Pigmente, Inhibitoren, UV- und Hitzestabilisatoren, Antistatika, Flammschutzmittel, Biozide, Weichmacher, Stabilisatoren, Wachse, Verlaufsmittel, Emulgatoren, Haftvermittler, Thixotropierungsmittel, Zähigkeitsverbesserer und weitere dem Fachmann bekannte gängige Rohstoffe und Additive.

Bei der erfindungsgemässen Zusammensetzung handelt es sich um eine mehrkomponentige Zusammensetzung, wobei die einzelnen Komponenten je nach Ausführungsform der Zusammensetzung unterschiedlich ausgestaltet sind. Typischerweise handelt es sich bei der erfindungsgemässen Zusammensetzung um eine zweikomponentige Zusammensetzung, wobei zwei Komponenten **K1** und **K2,** bis zur Applikation getrennt voneinander aufbewahrt werden.

In einer Ausführungsform handelt es sich um eine mehrkomponentige Zusammensetzung, welche ein radikalisch polymerisierbares Monomer aufweist. Typischerweise beinhaltet die erste Komponente **K1** insbesondere jene Inhaltsstoffe der beschriebenen Zusammensetzung, welche radikalisch polymerisierbare Gruppen aufweisen. Die zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

In einer besonders bevorzugten Variante dieser Ausführungsform, liegt die mehrkomponentige Zusammensetzung in der Art vor, dass einerseits die flüssigen und die festen Bestandteile und, unabhängig davon, der Radikalbildner und der Katalysator für die Radikalbildung jeweils getrennt voneinander vorliegen. Die flüssigen Bestandteile sind dabei insbesondere das Wasser und die radikalisch polymerisierbaren Monomere und gegebenenfalls weitere radikalisch polymerisierbare Bestandteile. Die festen Bestandteile sind vor allem das zementöse Bindemittel. Die Kunststoffdispersion kann entweder in dispergierter Form zusammen mit den flüssigen Bestandteilen oder in fester Form mit den festen Bestandteilen vorliegen. In einem ersten Schritt werden nun die flüssigen und festen Bestandteile miteinander vermischt, wobei es aufgrund des noch nicht beigemischten Radikalbildners und des Katalysators für die Radikalbildung noch zu keiner Polymerisationsreaktion der radikalisch polymerisierbaren Monomere kommt. Diese Mischung wird dann typischerweise in zwei Hälften aufgeteilt wobei zur einen Hälfte der Mischung der Radikalbildner hinzugefügt wird und zur anderen Hälfte der Katalysator für die Radikalbildung hinzugefügt wird. Somit erhält man die beiden Komponenten **K1** und **K2,** welche dann vor oder bei der Applikation der Zusammensetzung miteinander vermischt werden.

Die erfindungsgemässe mehrkomponentige Zusammensetzung eignet sich für eine Vielzahl von Anwendungen, insbesondere zum Füllen und/oder Verpressen von Rissen, Fehlstellen und Hohlräumen bei Bauwerken oder Boden- und Gesteinsformationen.

Neben der Verfüllung mit Injektionsschläuchen, kann dieses Material bei unterschiedlichsten Randbedingungen zur Rissinjektion eingesetzt werden. Selbst bei fliessendem Wasser im Füllkörper kann dieses Material durch die Möglichkeit einer sehr schnellen Reaktion der organischen Komponenten eingesetzt werden. Weiterhin sind auch verfüllende Injektionen oder Schleierinjektionen ins Erdreich mit den erfindungsgemässen Zusammensetzungen äusserst wirtschaftlich zu realisieren, weil die Eigenschaften der kostenintensiven organischen Bestandteile mit den Eigenschaften des kostengünstigeren zementösen Bindemittels vereint werden.

Somit betrifft die Erfindung weiterhin die Verwendung einer mehrkomponentigen Zusammensetzung, wie sie vorhergehend beschrieben wurde, zum Füllen und/oder Verpressen von Rissen, Fehlstellen und Hohlräumen bei Bauwerken oder Boden- und Gesteinsformationen.

Insbesondere wird die erfindungsgemässe Zusammensetzung als Injektionsmaterial verwendet und wird somit über Füll- und/oder Injektionsschläuche appliziert.

Zur Applikation der mehrkomponentigen Zusammensetzung wird diese vorzugsweise mit Hilfe einer Ein- oder Zweikomponenten-Pumpe über Füll- und Injektionsschläuche (Injektionspacker) in ein Bauteil, eine Boden- oder Gesteinsformation unter Druck injiziert oder mit Hilfe einer Airlesspistole auf Oberflächen zur Abdichtung oberflächlicher Fehlstellen und Undichtigkeiten aufgetragen.

Hierzu werden die flüssigen und die festen Bestandteile, aus denen die mehrkomponentige Zusammensetzung in ihrem Ausgangszustand besteht, vorzugsweise erst vor Ort, beispielsweise auf der Baustelle, unmittelbar vor Verwendung der Zusammensetzung, mit Hilfe einer hochtourigen Mischmaschine miteinander vermischt. Die reaktiven organischen Bestandteile werden in dieser Phase typischerweise noch nicht miteinander vermischt.

Beim Mischen der gesamten mehrkomponentigen Zusammensetzung, also auch der reaktiven Bestandteile miteinander, kann je nach Ausführungsform unterschiedlich vorgegangen werden. Ist die Reaktionszeit bzw. die Aushärtungsdauer der organischen Bestandteile beispielsweise so eingestellt, dass die Aushärtung nicht innerhalb einer kurzen Zeit erfolgt, dass also die so genannte Topfzeit eine vernünftige Verarbeitung der Zusammensetzung nach dem Mischen der reaktiven Komponenten zulässt, können sämtliche Bestandteile der mehrkomponentigen Zusammensetzung unmittelbar vor der Applikation miteinander vermischt werden und anschliessend, beispielsweise mittels Einkomponenten-Pumpe, in einen Injektionsschlauch injiziert oder auf ein Substrat aufgetragen werden. Ist hingegen die mehrkomponentige Zusammensetzung so beschaffen, dass die Reaktion der organischen Bestandteile bereits innerhalb kurzer Zeit nach dem Mischen erfolgen soll, wird die Zusammensetzung mit Hilfe einer Zweikomponenten-Pumpe appliziert, wobei die beiden reaktiven Komponenten erst bei der Applikation miteinander vermischt werden.

Die Aushärtung der erfindungsgemässen mehrkomponentigen Zusammensetzung erfolgt einerseits durch die Hydratation des enthaltenen Zements, und andererseits durch die Polymerisation der polymerisierbaren Bestandteile.

Bei der Zusammensetzung, die radikalisch polymerisierbare Monomere aufweist, erfolgt die Aushärtung durch radikalische Polymerisation der radikalisch polymerisierbaren Monomere und gegebenenfalls weiterer radikalisch polymerisierbarer Bestandteile in der Zusammensetzung.

Beim Einsatz von radikalisch polymerisierbaren Monomeren kann der Ablauf, insbesondere die Geschwindigkeit der zur Aushärtung der Zusammensetzung führenden Reaktionen durch die Wahl der eingesetzten Bestandteile eingestellt werden.

So können beim Abdichten oder Verfüllen bei fliessendem Wasser im Füllkörper, die Bedingungen bzw. die Bestandteile der mehrkomponentigen Zusammensetzung so gewählt werden, dass die Aushärtung der Zusammensetzung möglichst schnell verläuft und die Zusammensetzung bereits in einem frühen Stadium eine hohe Anfangsfestigkeit erhält. Im Gegensatz dazu, können langsam aushärtende Zusammensetzungen beispielsweise eingesetzt werden, wenn die Zusammensetzung über einen Injektionsschlauch in trockene Risse und Fehlstellen eingeführt werden soll und derselbe Injektionsschlauch durchgespült und dadurch gereinigt werden soll, um für spätere Injektionen wieder verwendet werden zu können. Zu schnell aushärtende Zusammensetzungen würden in diesem Fall den Injektionsschlauch verstopfen.

Ein weiterer Gegenstand der vorliegenden Erfindung ist auch ein Verfahren zur Applikation der mehrkomponentigen Zusammensetzung, wie sie vorhergehend beschrieben wurde, wobei die mehrkomponentige Zusammensetzung mit einer Ein- oder Zweikomponenten-Pumpe über Füll- und Injektionsanschlüsse in ein Bauteil, eine Boden- oder Gesteinsformation, in eine Arbeitsfuge oder lineare Fehlstelle injiziert wird.

Weiterhin betrifft die Erfindung ein Verfahren zur Applikation der mehrkomponentigen Zusammensetzung, wie sie vorhergehend beschrieben wurde, wobei die mehrkomponentige Zusammensetzung mit einer Airlesspistole auf Oberflächen zur Abdichtung oberflächlicher Fehlstellen und Undichtigkeiten aufgetragen wird.

Die vorliegende Erfindung betrifft weiterhin eine gehärtete Zusammensetzung, wie sie aus einer vorhergehend beschriebenen mehrkomponentigen Zusammensetzung erhältlich ist.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

In Tabelle 1 ist eine beispielhafte Rezeptur mit Mengenangaben der Bestandteile, definiert durch Markennamen, wie sie zum Zeitpunkt der Anmeldung üblich sind, angegeben.

**Tabelle 1 Mehrkomponentige Zusammensetzung in Gewichtsanteilen;**

| **Marke / Komponente** | **Beschreibung** | **Gewichtsanteile** |
|---|---|---|
| Multigel® 850 ^{a} | Standardinjektionsharz auf Acrylbasis bestehend aus verschiedenen hydrophilen Acrylatmonomeren | 12.1 Gew.-Anteile |
| VINNAPAS® 7031H^{b} | Dispersionspulver | 18 Gew.-Anteile |
| Katalysator | wässrige Lösung von Triethanolamin | 0.3 Gew.-Anteil |
| Radikalbildner | wässrige Natriumpersulfat-Lösung (4.4 Gew.-%) | 1.5 Gew.-Anteile |
| Wasser | | 36.3 Gew.-Anteile |
| Mikrodur®-RU ^{c} | Ultrafeinzement | 30.3 Gew.-Anteile |
| MSH^{d} | Fliessmittel | 1.5 Gew.-Anteile |

| | | |
|---|---|---|
| ^{a}erhältlich von Tricosal Bauabdichtungs-GmbH, DE; ^{b}erhältlich von Wacker Chemie AG, DE; ^{c}erhältlich von Dyckerhoff AG, DE; ^{d}Natriumsalz des Naphthalinsufonats. | | |

Durch die Kombination von Zement mit einem Acrylatmaterial und einer Kunststoffdispersion nach Tabelle 1 entsteht ein Verpressgut, dass folgendes Eigenschaftsspektrum aufweist:

### Reaktionszeiten

Die Reaktionszeit kann zwischen wenigen Sekunden und mehreren Stunden mit Hilfe des Katalysators für die Radikalbildung eingestellt werden. Die maximale Offenzeit wird massgeblich auch durch die verwendete Zementqualität und deren Alkalität beeinflusst.

Die Rezeptur nach Tabelle 1 weist bei 20 °C eine Topfzeit von etwa 70 Minuten auf und eignet sich somit sowohl für die Injektion von Rissen als auch zur Verpressung von Injektionsschläuchen.

Für weitere Rezepturen ist der Einfluss des Katalysators für die Radikalbildung in den folgenden Tabellen 2 und 3 dargestellt:

**Tabelle 2 Mehrkomponentige Zusammensetzung in Gewichtsanteilen;**

| **Marke / Komponente** | **Beschreibung** | **Gewichtsanteile** |
|---|---|---|
| Hydroxyethylmethacrylat | Monomer | 30 Gew.-Anteile |
| Acronal® DS 3511^{e} | Kunststoffdispersion | 8 Gew.-Anteile |
| Triethanolamin-Lösung (50 Gew.-% in Wasser) | Katalysator | variiert zur Darstellung des Einflusses |
| Natriumpersulfat-Lösung (4.4 Gew.-% in Wasser) | Radikalbildner | 4 Gew.-Anteile |
| | Wasser | 18 Gew.-Anteile |
| Tricodur®^{f} | Ultrafeinstzement | 40 Gew.-Anteile |

| | | |
|---|---|---|
| ^{e}erhältlich von BTC Speciality Chemical Distribution SAS; ^{f}erhältlich von Tricosal Bauabdichtungs-GmbH, DE. | | |

**Tabelle 3 Resultate der Variierung der Katalysatormenge.**

| **Gew.-Anteile des Katalysators** | **Reaktionszeit in min.** |
|---|---|
| 1 Gew.-Anteil | 72 Minuten |
| 2 Gew.-Anteile | 40 Minuten |
| 3 Gew.-Anteile | 23 Minuten |

### Materialeigenschaften

Das Endprodukt kann bei einem hohen Anteil an Poly(meth)acrylat weich und flexibel sein. Mit abnehmendem Poly(meth)acrylatanteil verfestigt sich das Reaktionsprodukt mit zunehmender Zeit und es dominieren nach einigen Tagen die Materialeigenschaften des zementösen Bindemittels. Durch den Einsatz einer geeigneten zusätzlichen Kunststoffkomponente in Form eines festen Kunststoffdispersionsanteils oder in Form einer flüssigen Kunststoffdispersion kann eine dauerhafte Elastizität des Verpressmaterials erzielt werden.

Proben der vollständig ausgehärteten Zusammensetzung nach Rezeptur in Tabelle 1 weisen auch nach 15 Monaten immer noch ein weichelastisches Verhalten auf.

Die Härte der ausgehärteten Zusammensetzung hängt von ihren Bestandteilen ab. Der Einfluss der polymerisierbaren Monomere auf die Härte des Verpressgutes ist in der folgenden Tabelle 4, 5 und 6 dargestellt.

**Tabelle 4 Mehrkomponentige Zusammensetzung mit unterschiedlicher Monomerzusammensetzung.**

| **Marke** / **Komponente** | **Beschreibung** | **Gewichtsanteile** | |
|---|---|---|---|
| Hydroxyethylmethacrylat | Monomer 1 | variiert zur Darstellung des Einflusses | 30 Gew.-Anteile |
| Methoxypolyethylenglycolm ethacrylat | Monomer 2 | variiert zur Darstellung des Einflusses | |
| Polyethylenglykoldimethacrylat, Mₙ (Polyethylenglykol) = 600 g/mol | Monomer 3 | variiert zur Darstellung des Einflusses | |
| Acronal® DS 3511 | Kunststoffdispersion | 8 Gew.-Anteile | |
| Triethanolamin-Lösung (50 Gew.-% in Wasser) | Katalysator | 1 Gew.-Anteile | |
| Natriumpersulfat-Lösung (4.4 Gew.-% in Wasser) | Radikalstarter | 4 Gew.-Anteile | |
| Wasser | | 17 Gew.-Anteile | |
| Tricodur® | Ultrafeinstzement | 40 Gew.-Anteile | |

**Tabelle 5 Monomerzusammensetzung**

| **Versuch** | **Gew.-Anteil Monomer 1** | **Gew.-Anteil Monomer 2** | **Gew.-Anteil Monomer 3** |
|---|---|---|---|
| Versuch 1 | 100% | | |
| Versuch 2 | 85% | 15% | |
| Versuch 3 | 70% | 30% | |
| Versuch 4 | 98% | | 2% |
| Versuch 5 | 68% | 30% | 2% |

**Tabelle 6 Shore A der mehrkomponentigen Zusammensetzungen mit unterschiedlicher Monomerzusammensetzung bestimmt nach DIN 53505.**

| **Versuch** | **Härte in Shore-A** |
|---|---|
| Versuch 1 | 90 |
| Versuch 2 | 62 |
| Versuch 3 | 55 |
| Versuch 4 | 77 |
| Versuch 5 | 28 |

### Quellung

Bei einem hohen Anteil an Poly(meth)acrylaten ist ein deutlicher Quelleffekt messbar. Die Quellung bietet eine zusätzliche Sicherheit der Abdichtung und kompensiert zudem mögliche Schrumpfeffekte, die bei Zementen mit hohem Feinheitsgrad auftreten können.

Zur Bestimmung der Quellung erfindungsgemässer Zusammensetzungen wird die Rezeptur von Versuch 5 aus den Tabellen 4 und 5 verwendet, wobei das zementöse Bindemittel zur Darstellung des Einflusses variiert wird.

Die Bestimmung der Quellung erfolgt in Anlehnung an DIN 53495. Die Quellung erfolgt dabei in 400 ml (± 10%) demineralisiertem Wasser (VE-Wasser) mit einem pH von 4.9 und bei Raumtemperatur (23 °C). Als Lagergefäss dient ein 860 ml Polyethylen-Becher, welcher während der gesamten Lagerung verschlossen bleibt. Ein Wechsel des Wassers findet nicht statt. Die Quellung der Proben wird durch Messung der Wasseraufnahme ermittelt, wobei die Probe nach dem Herausnehmen aus dem Wasserbad mit einem Filterpapier abgetupft wird. Eine erste Messung erfolgt nach einer Lagerung von 54 Tagen ("54d"), eine zweite Messung nach Lagerung von 180 Tagen ("180d"). Die Quellung ist als Gewichtszunahme der Probe während der Wasserlagerung gegenüber der Probe vor der Wasserlagerung in Prozent angeben. Die Resultate sind in Tabelle 7 dargestellt.

**Tabelle 7 Quellversuche;**

| | **pH** ^{g} | **Quellung (54d) [Gew.-%]** | **Quellung (180d) [Gew.-%]** |
|---|---|---|---|
| Rezeptur mit Mikrodur®-RU | 11.94 | 51.6 | 54.8 |
| Rezeptur mit Mikrodur®-PU^{h} | 12.58 | 23.2 | 21.5 |
| Rezeptur mit Tricodur® | 12.05 | 43.9 | 44.6 |
| Rezeptur mit Rheocem® 650 | 12.62 | 19.1 | 17.9 |

| | | | |
|---|---|---|---|
| ^{g} pH des VE-Wassers mit Probe; ^{h} erhältlich von Dyckerhoff AG, DE. | | | |

### pH-Wert

Alle Reaktionsprodukte, insbesondere Produkte auf Basis von Portlandzement, weisen eine hohe Alkalität auf und unterstützen somit die Passivierung des Bewehrungsstahls. Im Gegensatz zu vielen klassischen Acrylatharzen sorgt der hohe pH-Wert für einen aktiven Korrosionsschutz.

Proben von abgebundenem Verpressgut nach Rezeptur in Tabelle 1 weisen einen pH-Wert von 11,6 auf.

Die pH-Werte des VE-Wassers aus den Quellversuchen mit der darin enthaltenen Probe sind in Tabelle 7 dargestellt.

## Patentansprüche

1. Mehrkomponentige Zusammensetzung zum Füllen und/oder Verpressen von Rissen, Fehlstellen und Hohlräumen bei Bauwerken oder Boden- und Gesteinsformationen umfassend
i) Wasser;
ii) mindestes ein zementöses Bindemittel, wobei der Anteil des zementösen Bindemittels an der gesamten mehrkomponentigen Zusammensetzung 10 bis 70 Gew.-% beträgt;
iii) eine wässrige Kunststoffdispersion;
iv) mindestens ein radikalisch polymerisierbares Monomer, wobei der Anteil an radikalisch polymerisierbarem Monomer 5 bis 50 Gew.-% beträgt; sowie
v) mindestens einen Radikalbildner, wobei der Anteil an Radikalbildner 0.01 bis 5 Gew.-% beträgt,
**dadurch gekennzeichnet, dass** die wässrige Kunststoffdispersion ausgewählt ist aus der Gruppe bestehend aus einer wässrigen Dispersion von Poly(meth)acrylaten; aus einer wässrigen Dispersion von Copolymeren aus (Meth)acrylaten und Styrol; aus einer wässrigen Dispersion von Copolymeren aus (Meth)acrylaten und Vinylestern von tertiären Carbonsäuren; aus einer wässrigen Dispersion von Copolymeren aus (Meth)acrylaten, Vinylestern von tertiären Carbonsäuren und Vinylacetat; aus einer wässrigen Dispersion von Copolymeren aus Styrol und Butadien; aus einer wässrigen Dispersion von Copolymeren aus Vinylacetat und (Meth)acrylsäureester; aus einer wässrigen Dispersion von Copolymeren aus Vinylacetat und Ethylen; aus einer wässrigen Dispersion von Copolymeren aus Vinylacetat, Ethylen und Vinylester; und aus einer wässrigen Polyurethandispersionen.

2. Mehrkomponentige Zusammensetzung gemäss Anspruch 1, **dadurch gekennzeichnet, dass** die wässrige Kunststoffdispersion ausgewählt ist aus der Gruppe bestehend aus einer wässrigen Dispersion von (Meth)acrylatpolymeren; von Copolymeren aus (Meth)acrylaten und Styrol; von Copolymeren aus Styrol und Butadien; und von Copolymeren aus Vinylacetat, Ethylen und Vinylester.

3. Mehrkomponentige Zusammensetzung gemäss einem der vorhergehenden Ansprüche, **dadurch gekennzeichnet, dass** das radikalisch polymerisierbare Monomer ein hydrophiles (Meth)acrylatmonomer ist, insbesondere ein Monomer ausgewählt aus der Gruppe bestehen aus (Meth)acrylsäure; einem Salz von (Meth)acrylsäure; einem Hydroxyalkyl(meth)acrylat wie Hydroxyethylacrylat (HEA), Hydroxyethylmethacrylat (HEMA), Hydroxypropylacrylat (HPA), Hydroxypropylmethacrylat (HPMA), Hydroxybutylacrylat (HBA) oder Hydroxybutylmethacrylat (HBMA); einem Monohydroxypoly(meth)acrylat eines Polyols wie Glycerin oder Trimethylolpropan; einem Alkoxypolyalkylenglykol(meth)acrylat wie Methoxypolyethylenglykolmethacrylat, wobei das Molekulargewicht Mₙ des Polyethylenglykols 300 bis 1000 g/mol, beträgt; einem Polyethylenglykoldi(meth)acrylat und einem hydrophilen Polyurethan(meth)acrylat.

4. Mehrkomponentige Zusammensetzung gemäss Anspruch 3, **dadurch gekennzeichnet, dass** der Radikalbildner ausgewählt ist aus der der Gruppe bestehend aus Azo-bis-isobutyronitril, einer anorganischen Peroxidverbindung, insbesondere einer Peroxidverbindung aus Kalium- und/oder Ammoniumperoxodisulfat, und einer organischen Peroxidverbindung.

5. Mehrkomponentige Zusammensetzung gemäss Anspruch 4, **dadurch gekennzeichnet, dass** die Zusammensetzung zusätzlich mindestens einen Katalysator für die Radikalbildung aufweist.

6. Mehrkomponentige Zusammensetzung gemäss Anspruch 5, **dadurch gekennzeichnet, dass** der Katalysator für die Radikalbildung ein Di- oder ein Trialkanolamin, oder deren Mischung, ist.

7. Mehrkomponentige Zusammensetzung gemäss Anspruch 1, **dadurch gekennzeichnet, dass** das zementöse Bindemittel ein Zement mit einer Feinheit von 2'000 bis 16'000 cm²/g nach Blaine ist.

8. Mehrkomponentige Zusammensetzung gemäss Anspruch 7, **dadurch gekennzeichnet, dass** das zementöse Bindemittel ein Kompositzement, ein Portlandzement oder eine Mischung aus Portlandzement und Hüttensand ist.

9. Verwendung einer mehrkomponentigen Zusammensetzung gemäss einem der Ansprüche 1 bis 8 zum Füllen und/oder Verpressen von Rissen, Fehlstellen und Hohlräumen bei Bauwerken oder Boden- und Gesteinsformationen.

10. Verwendung gemäss Anspruch 9, **dadurch gekennzeichnet, dass** die mehrkomponentige Zusammensetzung über Füll- und/oder Injektionsschläuche appliziert wird.

11. Verfahren zur Applikation der mehrkomponentigen Zusammensetzung nach einem der Ansprüche 1 bis 8, **dadurch gekennzeichnet, dass** die mehrkomponentige Zusammensetzung mit einer Ein- oder Zweikomponenten-Pumpe über Füll- und Injektionsanschlüsse in ein Bauteil, eine Boden- oder Gesteinsformation, in eine Arbeitsfuge oder lineare Fehlstelle injiziert wird.

12. Verfahren zur Applikation der mehrkomponentigen Zusammensetzung nach einem der Ansprüche 1 bis 8, **dadurch gekennzeichnet, dass** die mehrkomponentige Zusammensetzung mit einer Airlesspistole auf Oberflächen zur Abdichtung oberflächlicher Fehlstellen und Undichtigkeiten aufgetragen wird.

## Claims

1. Multicomponent composition for filling and/or injecting cracks, flaws and cavities in structures or earth and rock formations, comprising
i) water;
ii) at least one cementitious binder, wherein the proportion of the cementitious binder, based on the total multicomponent composition, is from 10 to 70% by weight;
iii) an aqueous plastic dispersion;
iv) at least one monomer capable of free radical polymerization, wherein the proportion of monomer capable of free radical polymerization is from 5 to 50% by weight; and
v) at least one free radical initiator, wherein the proportion of free radical initiator is 0.01 to 5% by weight,
**characterized in that** the aqueous plastic dispersion is selected from the group consisting of an aqueous dispersion of poly(meth)acrylates; of an aqueous dispersion of copolymers of (meth)acrylates and styrene; of an aqueous dispersion of copolymers of (meth)acrylates and vinyl esters of tertiary carboxylic acids; of an aqueous dispersion of copolymers of (meth)acrylates, vinyl esters of tertiary carboxylic acids and vinyl acetate; of an aqueous dispersion of copolymers of styrene and butadiene; of an aqueous dispersion of copolymers of vinyl acetate and (meth)acrylates; of an aqueous dispersion of copolymers of vinyl acetate and ethylene; of an aqueous dispersion of copolymers of vinyl acetate, ethylene and vinyl ester; and of an aqueous polyurethane dispersion.

2. Multicomponent composition according to Claim 1, **characterized in that** the aqueous plastic dispersion is selected from the group consisting of an aqueous dispersion of (meth)acrylate polymers; of copolymers of (meth)acrylates and styrene; of copolymers of styrene and butadiene; and of copolymers of vinyl acetate, ethylene and vinyl ester.

3. Multicomponent composition according to either of the preceding claims, **characterized in that** the monomer capable of free radical polymerization is a hydrophilic (meth)acrylate monomer, in particular a monomer selected from the group consisting of (meth)acrylic acid; a salt of (meth)acrylic acid; a hydroxyalkyl (meth)acrylate, such as hydroxyethyl acrylate (HEA), hydroxyethyl methacrylate (HEMA), hydroxypropyl acrylate (HPA), hydroxypropyl methacrylate (HPMA), hydroxybutyl acrylate (HBA) or hydroxybutyl methacrylate (HBMA); a monohydroxy poly(meth)acrylate of a polyol such as glycerol or trimethylolpropane; an alkoxypolyalkylene glycol (meth)acrylate, such as methoxypolyethylene glycol methacrylate, the molecular weight Mₙ of the polyethylene glycol being from 300 to 1000 g/mol; a polyethylene glycol di(meth)acrylate and a hydrophilic polyurethane (meth)acrylate.

4. Multicomponent composition according to Claim 3, **characterized in that** the free radical initiator is selected from the the group consisting of azobisisobutyronitrile, an inorganic peroxide compound, in particular a peroxide compound of potassium and/or ammonium peroxodisulfate, and an organic peroxide compound.

5. Multicomponent composition according to Claim 4, **characterized in that** the composition additionally has at least one catalyst for the free radical formation.

6. Multicomponent composition according to Claim 5, **characterized in that** the catalyst for the free radical formation is a di- or a trialkanolamine, or a mixture thereof.

7. Multicomponent composition according to Claim 1, **characterized in that** the cementitious binder is a cement having a fineness of from 2000 to 16 000 cm²/g according to Blaine.

8. Multicomponent composition according to Claim 9, **characterized in that** the cementitious binder is a composite cement, a Portland cement or a mixture of Portland cement and slag sand.

9. Use of a multicomponent composition according to any of Claims 1 to 8 for filling and/or injecting cracks, flaws and cavities in structures or earth and rock formations.

10. Use according to Claim 9, **characterized in that** the multicomponent composition is applied via filling and/or injecting tubes.

11. Method for applying the multicomponent composition according to any of Claims 1 to 8, **characterized in that** the multicomponent composition is injected with a one- or two-component pump via filling and injecting connections into a component, into an earth or rock formation or into a construction joint or linear flaw.

12. Method for applying the multicomponent composition according to any of Claims 1 to 8, **characterized in that** the multicomponent composition is applied with an airless gun to surfaces for sealing surface flaws and leaks.

## Revendications

1. Composition à plusieurs composants pour le remplissage de et/ou l'injection dans des fissures, des défauts et des espaces creux dans des constructions ou des formations de sol et rocheuses, comprenant
i) de l'eau ;
ii) au moins un liant cimentaire, la proportion de liant cimentaire par rapport à la composition totale à plusieurs composants représentant 10 à 70% en poids ;
iii) une dispersion aqueuse de matière synthétique ;
iv) au moins un monomère polymérisable par voie radicalaire, la proportion de monomère polymérisable par voie radicalaire représentant 5 à 50% en poids ; ainsi que
v) au moins un agent de formation de radicaux, la proportion d'agent de formation de radicaux représentant 0,01 à 5% en poids,
**caractérisée en ce que** la dispersion aqueuse de matière synthétique est choisie dans le groupe constitué par une dispersion aqueuse de poly(méth)acrylates ; une dispersion aqueuse de copolymères de (méth)acrylates et de styrène ; une dispersion aqueuse de copolymères de (méth)acrylates et d'esters vinyliques d'acides carboxyliques tertiaires ; une dispersion aqueuse de copolymères de (méth)acrylates, d'esters vinyliques d'acides carboxyliques tertiaires et d'acétate de vinyle ; une dispersion aqueuse de copolymères de styrène et de butadiène ; une dispersion aqueuse de copolymères d'acétate de vinyle et d'esters de l'acide (méth)acrylique ; une dispersion aqueuse de copolymères d'acétate de vinyle et d'éthylène ; une dispersion aqueuse de copolymères d'acétate de vinyle, d'éthylène et d'esters de vinyle ; et une dispersion aqueuse de polyuréthane.

2. Composition à plusieurs composants selon la revendication 1, **caractérisée en ce que** la dispersion aqueuse de matière synthétique est choisie dans le groupe constitué par une dispersion aqueuse de polymères de (méth)acrylate ; de copolymères de (méth)acrylates et de styrène ; de styrène et de butadiène ; et de copolymères d'acétate de vinyle, d'éthylène et d'esters de vinyle.

3. Composition à plusieurs composants selon l'une quelconque des revendications précédentes, **caractérisée en ce que** le monomère polymérisable par voie radicalaire est un monomère hydrophile de type (méth)acrylate, en particulier un monomère choisi dans le groupe constitué par l'acide (méth)acrylique ; un sel de l'acide (méth)acrylique ; un (méth)acrylate d'hydroxyalkyle, tel que l'acrylate d'hydroxyéthyle (HEA), le méthacrylate d'hydroxyéthyle (HEMA), l'acrylate d'hydroxypropyle (HPA), le méthacrylate d'hydroxypropyle (HPMA), l'acrylate d'hydroxybutyle (HBA) ou le méthacrylate d'hydroxybutyle (HBMA) ; un monohydroxypoly(méth)acrylate d'un polyol tel que le glycérol ou le triméthylolpropane ; un (méth)acrylate d'alcoxypolyalkylèneglycol, tel que le méthacrylate de méthoxypolyéthylèneglycol, le poids moléculaire Mₙ du polyéthylèneglycol valant 300 à 1000 g/mole ; un di(méth)acrylate de polyéthylèneglycol et un polyuréthane-(méth)acrylate hydrophile.

4. Composition à plusieurs composants selon la revendication 3, **caractérisée en ce que** l'agent de formation de radicaux est choisi dans le le groupe constitué par l'azo-bis-isobutyronitrile, un composé peroxyde inorganique, en particulier un composé peroxyde provenant de peroxodisulfate de potassium et/ou d'ammonium et un composé peroxyde organique.

5. Composition à plusieurs composants selon la revendication 4, **caractérisée en ce que** la composition contient en outre au moins un catalyseur pour la formation des radicaux.

6. Composition à plusieurs composants selon la revendication 5, **caractérisée en ce que** le catalyseur pour la formation de radicaux est une dialcanolamine, une trialcanolamine ou leur mélange.

7. Composition à plusieurs composants selon la revendication 1, **caractérisée en ce que** le liant cimentaire est un ciment présentant une finesse de 2000 à 16.000 cm²/g selon Blaine.

8. Composition à plusieurs composants selon la revendication 7, **caractérisée en ce que** le liant cimentaire est un ciment composite, un ciment Portland ou un mélange de ciment Portland et de laitier de haut-fourneau granulé.

9. Utilisation d'une composition à plusieurs composants selon l'une quelconque des revendications 1 à 8 pour le remplissage de et/ou l'injection dans des fissures, des défauts et des espaces creux dans des constructions ou des formations de sol et rocheuses.

10. Utilisation selon la revendication 9, **caractérisée en ce que** la composition à plusieurs composants est appliquée via des flexibles de remplissage et/ou d'injection.

11. Procédé pour l'application de la composition à plusieurs composants selon l'une quelconque des revendications 1 à 8, **caractérisé en ce que** la composition à plusieurs composants est injectée à l'aide d'une pompe à un ou deux composants via des raccords de remplissage et/ou d'injection dans une pièce, une formation de sol ou rocheuse, dans un joint de construction ou dans un défaut linéaire.

12. Procédé pour l'application de la composition à plusieurs composants selon l'une quelconque des revendications 1 à 8, **caractérisé en ce que** la composition à plusieurs composants est appliquée à l'aide d'un pistolet airless sur des surfaces pour boucher des défauts et des irrégularités de surface.
